# EUROPEAN PATENT SPECIFICATION

(11) **EP 3 358 173 B1**
(45) Date of publication and mention of the grant of the patent: **31.07.2019**
(21) Application number: 18150320.2
(22) Date of filing: 04.01.2018
(51) Int. Cl.: F02K 1/04, F02K 1/46

(54) **CORE COWL AFTER-BODY**
INNENHAUBENHINTERKÖRPER
CORPS ARRIÈRE DE CAPOT CENTRAL

(30) Priority: 02.02.2017 GB 201701710
(43) Date of publication of application: 08.08.2018
(73) Proprietor: Rolls-Royce plc, London SW1E 6AT (GB)
(72) Inventor: Wells, John, Derby, Derbyshire DE24 8BJ (GB)
(74) Representative: Rolls-Royce plc

(56) References cited:
- EP-A1- 1 703 114
- EP-A1- 2 495 424
- JP-A- 2015 209 839
- US-A1- 2009 090 095
- US-A1- 2016 061 115

## Description

### Field of the Invention

The present invention relates to a core cowl after-body of a gas turbine engine.

### Background

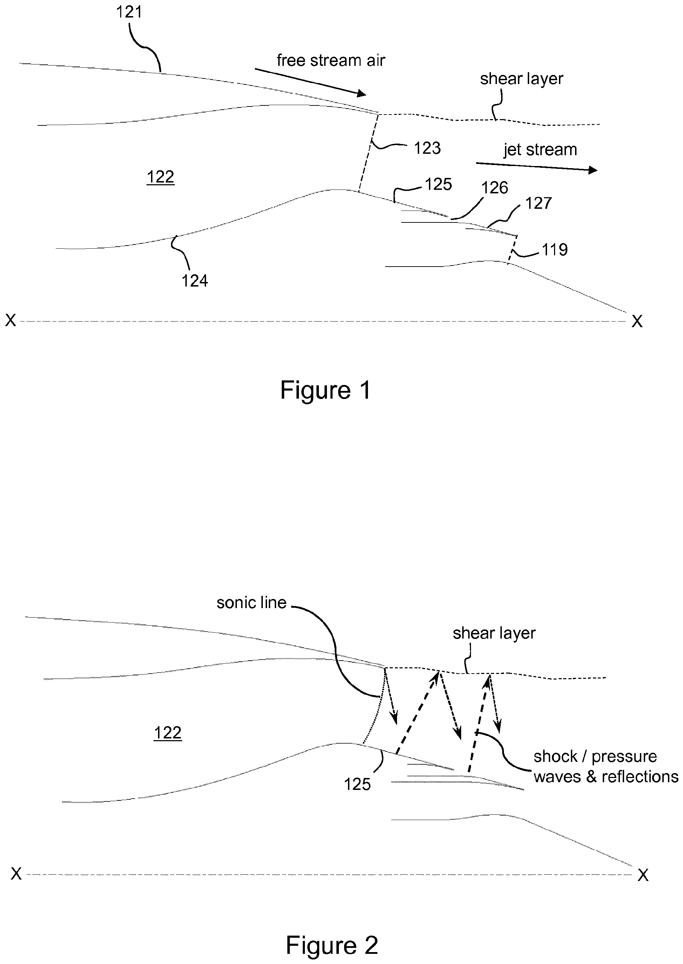

A conventional gas turbine engine has a core exhaust nozzle for exit of hot gas from its core engine and a bypass exhaust nozzle for exit of a flow of bypass air from its radially outwards bypass duct, the bypass exhaust nozzle being forward, i.e. upstream, of the core exhaust nozzle. **Figure** 1 shows schematically a longitudinal section through a rear portion of such an engine having a principal and rotational axis X-X.

A nacelle 121 surrounds the bypass duct 122, and at its rearward end defines a bypass exhaust nozzle 123. The core exhaust nozzle 119 is then located rearwardly of the bypass exhaust nozzle. An inner wall 124 of the bypass duct forms a surrounding cowl of the core engine and ends at the bypass exhaust nozzle. A core cowl after-body 125 provides a frustoconical air-washed surface topologically continuing the bypass duct inner wall downstream of the bypass exhaust nozzle and terminating at a core rear fire zone exhaust vent 126 located between the bypass exhaust nozzle 123 and the core exhaust nozzle 119.

Within the inner wall 124 of the bypass duct and the core cowl after-body 125, a core rear fire zone surrounds the core engine, and the vent 126 allows gases dumped into the core rear fire zone to be exhausted. For example, a constant flow of air is syphoned from the bypass air flow to pass through the core rear fire zone in order to comply with fire regulations and to manage the temperature of the zone and the core engine.

A separate vent after-body 127 extends between the vent 126 and the core exhaust nozzle 119.

Generally, the core cowl after-body 125 and the vent after-body 127 do not form a complete annulus around the engine. Rather they are typically interrupted for a limited angular range by a pylon structure which attaches the engine to the aircraft.

Whilst the upstream end of the core cowl after-body 125 may still exhibit some curvature, generally the majority of its air-washed surface is frustoconical, converging in a straight line (on the longitudinal section) in the downstream direction at a conic half angle of about 15°, this angle typically being set by the air frame manufacturer.

On leaving the bypass exhaust nozzle 123, pressure waves form along the air-washed surface of the core cowl after-body 125. These pressure waves traverse the jet stream and reflect back off the shear layer at the interface between the jet stream and the free stream air. Shocks which propagate within the pressure waves and/or pressure wave reflections may occur at locations which adversely affect the overall efficiency of the bypass exhaust. Such pressure waves and reflections are shown schematically in **Figure 2** for the arrangement of Figure 1. In addition, the formation of shocks can produce increased levels of aircraft cabin noise.

EP 1 703 114 A1 discloses bumps or undulations provided on a nozzle surface in order to vary the convergent-divergent ratio between that surface and an opposed nozzle surface.

Thus it would be desirable to be able to manipulate the strength of the pressure waves / shocks which form across the airflow leaving the bypass exhaust nozzle 123 by controlling the location(s) along the core cowl after-body 125 at which the pressure waves initiate.

### Summary

Accordingly, in a **first aspect**, the present invention provides a gas turbine engine including:
a core engine having a working gas annulus which ends in a core exhaust nozzle for exit of hot gas from the core engine;
a bypass duct which ends in a bypass exhaust nozzle for exit of a flow of bypass air from the bypass duct, the bypass exhaust nozzle being forward of the core exhaust nozzle, and the bypass duct having an inner wall which forms a surrounding cowl of the core engine and ends at the bypass exhaust nozzle; and
a core cowl after-body which provides a frustoconical air-washed surface continuing unbroken, on a longitudinal section through the engine, the line of the bypass duct inner wall downstream of the bypass exhaust nozzle;
wherein the air-washed surface of the core cowl after-body has plural axially-spaced circumferentially extending corrugations which locally disturb the flow of air over the surface.

The gas turbine engine may be a ducted fan gas turbine engine. Advantageously, the one or more circumferentially extending corrugations can afford a degree of control over the pressure waves traversing the jet stream down-stream of the bypass exhaust nozzle.

Optional features of the invention will now be set out. These are applicable singly or in any combination with any aspect of the invention.

The frustoconical air-washed surface may continue unbroken the line of the bypass duct inner wall downstream of the bypass exhaust nozzle to terminate at a lip of a circumferentially extending vent forward of the core exhaust nozzle. Such a vent can exhaust air from a rear fire zone which surrounds the core engine and which is inside the core cowl after-body.

Typically the frustoconical air-washed surface is configured such that, on the longitudinal section through the engine, it converges with the engine axis at an angle of about 15°.

One, some or all of the corrugations may be configured such that, on a longitudinal section through the engine, they form discrete steps in the profile of the air-washed surface on the longitudinal section.

Alternatively or additionally, one, some or all of the corrugations may be configured such that, on a longitudinal section through the engine, they form smooth waves in the profile of the air-washed surface on the longitudinal section.

The height of the corrugations may be at least 0.1 mm, and preferably at least 0.2 mm. The height of the corrugations may be at most 3 mm, and preferably at most 1 mm. In other words, the height of the corrugations may be from 0.1 to 3 mm. In some embodiments the height of the corrugations is from 0.2 to 1 mm.

The corrugations may extend around the full circumferential extent of the core cowl after-body at any given axial position. Another option, however, is for the corrugations to extend circumferentially only partially around the full circumferential extent of the core cowl after-body. Related to this, the heights of the corrugations may be constant around their circumferential extents, or may vary around their circumferential extents. The axial position of a given corrugation may be constant around its circumferential extent, or may vary around its circumferential extent. The heights of any two or more of the corrugations may be different to each other.

Thus the shape, location, height, circumferential extent, number and or spacing of the corrugations may be varied as necessary e.g. in order to manipulate the location of shock and pressure waves so as to achieve a lower overall loss solution.

### Brief Description of the Drawings

Embodiments of the invention will now be described by way of example with reference to the accompanying drawings in which:
Figure 1 shows schematically a longitudinal section through a rear portion of a conventional gas turbine engine;
Figure 2 shows schematically a typical natural shock / pressure wave pattern resulting from air flows over a conical core cowl after-body of Figure 1;
Figure 3 shows a longitudinal cross-section through a gas turbine engine;
Figure 4 shows (A) the air-washed surfaces of a core cowl after-body and a vent after-body, and (B) a close-up view of a portion of the after-body air-washed surface;
Figure 5 shows (A) the air-washed surface of a variant core cowl after-body, and (B) a close-up view of a portion of the after-body air-washed surface;
Figure 6 shows schematically, a controlled shock / pressure wave pattern resulting from air flows over a core cowl after-body having circumferentially extending corrugations; and
Figure 7 shows a rear perspective view of a gas turbine engine having a variant core cowl after-body and vent topology.

### Detailed Description

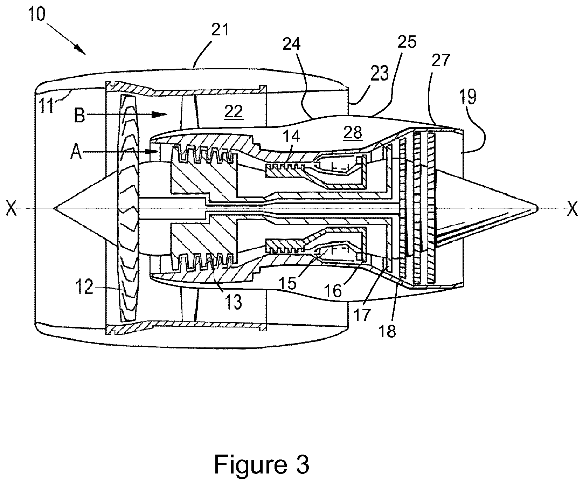

With reference to **Figure 3**, a gas turbine engine incorporating the invention is generally indicated at 10 and has a principal and rotational axis X-X. Although the engine shown is a three-shaft engine, the invention is equally applicable to two-shaft engines and single shaft engines. The engine comprises, in axial flow series, an air intake 11, a propulsive fan 12, an intermediate pressure compressor 13, a high pressure compressor 14, combustion equipment 15, a high pressure turbine 16, an intermediate pressure turbine 17, a low pressure turbine 18 and a core engine exhaust nozzle 19. A nacelle 21 encases a bypass duct 22 which surrounds the engine 10, and extends from an air intake highlight to a lip of a bypass exhaust nozzle 23.

During operation, air entering the intake 11 is accelerated by the fan 12. Aft of the fan the air stream is split into two separate air flows: a first air flow A into the intermediate pressure compressor 13 and a second airflow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high pressure compressor 14 is directed into the combustion equipment 15 where it is mixed with fuel and the mixture combusted. The resultant hot combustion products then expand through, and thereby drive the high, intermediate and low pressure turbines 16, 17, 18 before being exhausted through the nozzle 19 to provide additional propulsive thrust. The high, intermediate and low pressure turbines respectively drive the high and intermediate pressure compressors 14, 13 and the fan 12 by suitable interconnecting shafts.

The bypass duct 22 has an inner wall 24 which forms a surrounding cowl of the core engine and ends at the bypass exhaust nozzle 23. A core cowl after-body 25 then provides a frustoconical air-washed surface which continues the line of the bypass duct inner wall downstream of the bypass exhaust nozzle to terminate at a lip of a circumferentially extending vent (not shown in Figure 3) located axially between the bypass exhaust nozzle and the core exhaust nozzle 19. The vent is used to exhaust air syphoned from the second air flow B into a core rear fire zone 28 of the engine. A separate vent after-body 27 provides the air washed surface between the vent and the core exhaust nozzle 19.

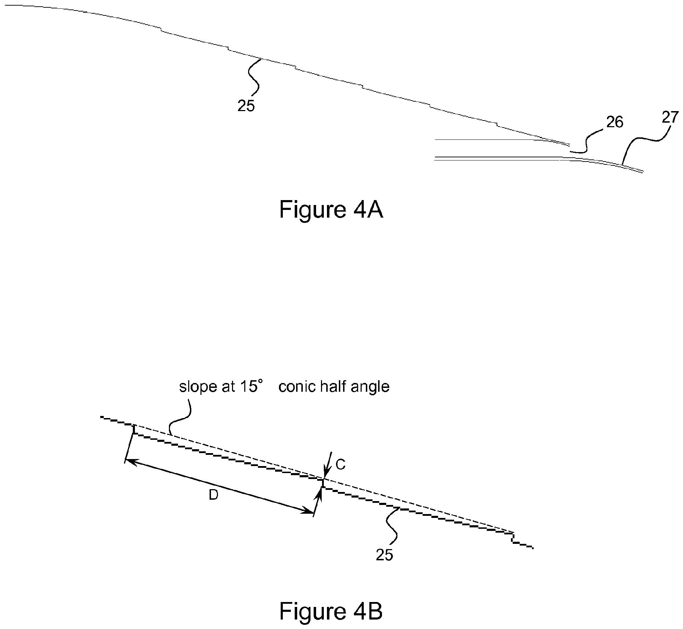

**Figure 4A** shows the air-washed surface of the core cowl after-body 25, the circumferentially extending vent 26 for exhausting air from the core rear fire zone 28, and the air-washed surface of the vent after-body 27, while **Figure 4B** shows a close-up view of a portion of the air-washed surface of the core cowl after-body 25. The air-washed surface has axially-spaced circumferentially extending corrugations which form discrete steps in the profile of the surface. These steps locally disturb the flow of air over the surface to enabling manipulation of the location and strength of shocks and pressure waves within the airflow exiting the bypass duct exhaust nozzle 23. As shown best in the close-up view of Figure 4B, these steps can be configured such that the overall slope of the air-washed surface gives the surface a 15° conic half angle, as typically required by air frame manufacturers. However, the surface can be configured to give a steeper or gentler slope as desired, for example by changing the angle of the surface sections between the steps.

The location, the height C, the circumferential extent, the number and/or the spacing D of the steps may be varied as necessary in order to better manipulate the location and strength of shocks and pressure waves in the airflow.

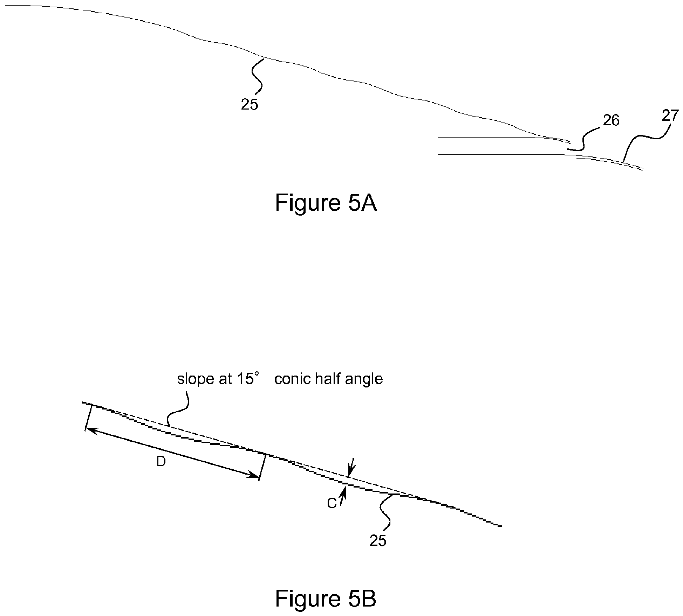

Indeed, the shape of the corrugations can be varied, and differently shaped corrugations can be used on the same core cowl after-body. **Figure 5A** shows the air-washed surface of a variant core cowl after-body 25, and **Figure 5B** shows a close-up view of a portion of the air-washed surface. In the variant, instead of the corrugations forming discrete steps in the profile of the surface, they form smooth waves with peaks and troughs. These waves can be formed as e.g. constant radius peaks and troughs, peaks and troughs of differing size radii, a Bezier spline, or any combination thereof.

Whatever shape is selected for the corrugations, the heights C of the corrugations may be at least 0.1 mm, and preferably at least 0.2 mm and/or the heights C may be at most 3 mm, and preferably at most 1 mm. Such heights are generally sufficient to enable manipulation of the airflow, without being so large that the local disturbances create unacceptable losses. However the heights of individual corrugations on the same core cowl after-body 25 may differ as necessary to achieve the desired result.

By controlling the location and strength of pressure waves / shocks in the airflow exiting the bypass exhaust nozzle 23 it is possible to improve the exhaust thrust coefficient Cv and the engine specific fuel consumption (sfc), where Cv = Actual Gross Thrust / Ideal Gross Thrust, and defines the level of efficiency of the whole exhaust system. In addition, by reducing the strengths of the shocks, noise reduction in shock cells can be achieved.

More particularly, profiling the air-washed surface of the core cowl after-body 25 as described above can force the airflow to change direction at a specific location and in doing so initiate a pressure wave / shock of controlled magnitude. In this way it is possible to:
- disrupt the airflow to a relatively small extent upstream in order to reduce or eliminate stronger shocks downstream,
- move shocks to lower Mach number regions to reduce their strength, and/or
- increase the angle of a pressure wave relative to the air-washed surface normal to reduce the magnitude of shocks which propagate.

In particular, up to a point, a series of small shocks is considered more desirable than a lesser number of shocks of greater magnitude. This is because:
- Several smaller shocks equate to a reduced overall pressure loss.
- Pressure waves which initiate along the air-washed surface of the core cowl after-body 25 traverse the jet stream exiting the bypass exhaust nozzle 23 and reflect back off the shear layer, the shear layer being the interface between the jet stream and the free stream air. Having a degree of control over both the originating pressure wave and hence its reflection allows the path of either or both to be guided to coincide with an undesirable shock propagating along a separate pressure wave within the jet stream. This can cause a disruption within the shock path so as to reduce the strength of the shock.

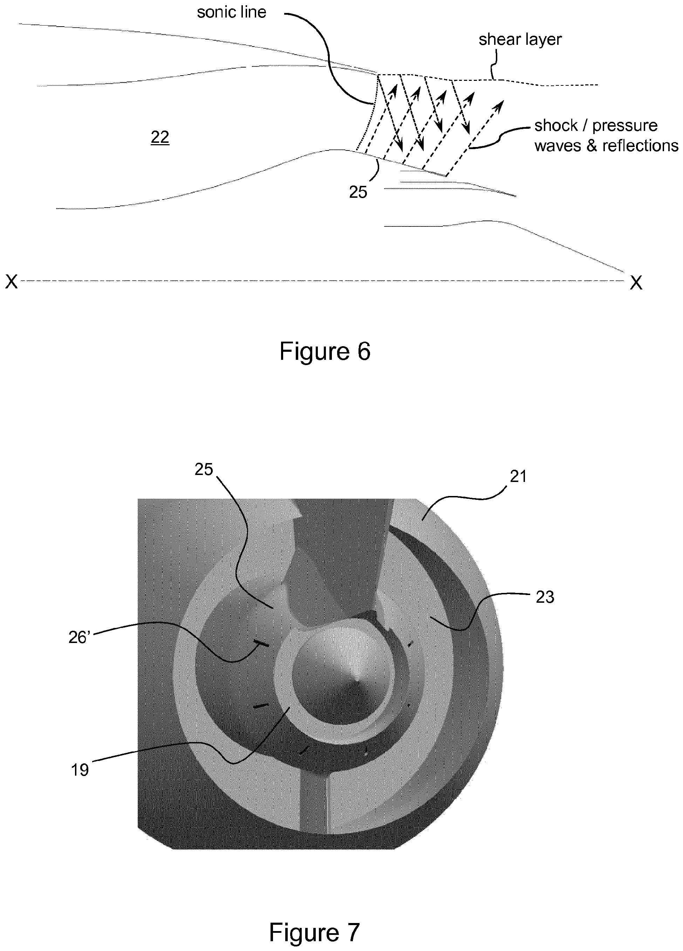

**Figure 6** shows schematically an exemplary controlled shock / pressure wave pattern over a core cowl after-body 25 of the type described above having circumferentially extending corrugations which locally disturb the flow of air over the surface.

In the embodiment of Figures 3 to 6, the vent 26 extends the full circumferential extent of the core cowl after-body 25. However, other options are possible for venting the core rear fire zone 28 of the engine. These options are compatible with the provision of circumferentially extending corrugation(s) on the air-washed surface of the core cowl after-body 25. For example, **Figure 7** shows an embodiment in which, instead of a single circumferentially extending vent 26, plural (in this case six) circumferentially spaced, slot-like vents 26' are provided. To accommodate thermal expansion of the core engine, the core cowl after-body 25 may also include a relatively compliant annular member (not shown). As another example, the single circumferentially extending vent 26 can be replaced by a series of axially-spaced circumferentially extending vents 26. A multi-vent topology allows different vents to be dedicated to different purposes. Thus one vent can exhaust the core rear fire zone 28 at a required rate, while another vent can exhaust gear box heater matrix air (on a geared fan engine). The individual vents, being radially narrower than a single vent, can reduce losses in the jet stream by reducing the extent to which the jet stream has to change direction when it passes over a given vent. Also the cushion of relatively low velocity air flow exhausted out through the vents can be spread more evenly over the air-washed surfaces of the core cowl after-body 25 and subsequent after-bodies 27, helping to reduce the magnitude of the viscous forces between the jet stream and the boundary layer on the air-washed surfaces.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A gas turbine engine (10) including:
a core engine having a working gas annulus which ends in a core exhaust nozzle (19) for exit of hot gas from the core engine;
a bypass duct (22) which ends in a bypass exhaust nozzle (23) for exit of a flow of bypass air from the bypass duct, the bypass exhaust nozzle being forward of the core exhaust nozzle, and the bypass duct having an inner wall (24) which forms a surrounding cowl of the core engine and ends at the bypass exhaust nozzle; and
a core cowl after-body (25) which provides a frustoconical air-washed surface continuing unbroken, on a longitudinal section through the engine, the line of the bypass duct inner wall downstream of the bypass exhaust nozzle;
**characterised in that** the air-washed surface of the core cowl after-body has plural axially-spaced circumferentially extending corrugations which locally disturb the flow of air over the surface.

2. A gas turbine engine according to claim 1, wherein the frustoconical air-washed surface continues unbroken the line of the bypass duct inner wall downstream of the bypass exhaust nozzle to terminate at a lip of a circumferentially extending vent (26) forward of the core exhaust nozzle.

3. A gas turbine engine according to claim 1 or 2, wherein one or at least some of the corrugations are configured such that, on a longitudinal section through the engine, they form discrete steps in the profile of the air-washed surface on the longitudinal section.

4. A gas turbine engine according to any one of the previous claims, wherein one or at least some of the corrugations are configured such that, on a longitudinal section through the engine, they form smooth waves in the profile of the air-washed surface on the longitudinal section.

5. A gas turbine engine according to any one of the previous claims, wherein the height of the corrugations is from 0.1 to 3 mm.

6. A gas turbine engine according to claim 5, wherein the height of the corrugations is from 0.2 to 1 mm.

## Patentansprüche

1. Gasturbinenmotor (10), enthaltend:
einen Innenmotor mit einem Betriebsgasring, der in einer Innenausstromdüse (19) für das Ausströmen von heißem Gas aus dem Innenmotor endet;
eine Umgehungsleitung (22), die in einer Umgehungsausstromdüse (23) für das Ausströmen eines Stromes von Umgehungsluft aus der Umgehungsleitung endet, wobei sich die Umgehungsausstromdüse vor der Innenausstromdüse befindet und die Umgehungsleitung eine Innenwand (24) aufweist, die eine umgebende Haube des Innenmotors bildet und an der Umgehungsausstromdüse endet;
und einen Innenhaubenhinterkörper (25), der eine kegelstumpfförmige, luftgespülte Oberfläche bereitstellt, die in einem Längsschnitt durch den Motor die Linie der Innenwand der Umgehungsleitung stromabwärts der Umgehungsausstromdüse ununterbrochen fortsetzt;
**dadurch gekennzeichnet, dass** die luftgespülte Oberfläche des Innenhaubenhinterkörpers mehrere axial beabstandete, in Umfangsrichtung verlaufende Wellen aufweist, die den Luftstrom über die Oberfläche lokal behindern.

2. Gasturbinenmotor nach Anspruch 1, wobei die kegelstumpfförmige, luftgespülte Oberfläche die Linie der Innenwand der Umgehungsleitung stromabwärts von der Umgehungssausstromdüse ununterbrochen fortsetzt, um an einer Lippe einer in Umfangsrichtung verlaufenden Öffnung (26) vor der Innenausstromdüse abzuschließen.

3. Gasturbinenmotor nach Anspruch 1 oder 2, wobei eine oder mindestens einige der Wellen so konfiguriert sind, dass sie in einem Längsschnitt durch den Motor separate Absätze im Profil der luftgewaschenen Oberfläche im Längsschnitt bilden.

4. Gasturbinenmotor nach einem der vorstehenden Ansprüche, wobei eine oder mindestens einige der Wellen so konfiguriert sind, dass sie in einem Längsschnitt durch den Motor weiche Wellen im Profil der luftgewaschenen Oberfläche im Längsschnitt bilden.

5. Gasturbinenmotor nach einem der vorstehenden Ansprüche, wobei die Höhe der Wellen von 0,1 bis 3 mm reicht.

6. Gasturbinenmotor nach Anspruch 5, wobei die Höhe der Wellen von 0,2 bis 1 mm reicht.

## Revendications

1. Moteur à turbine à gaz (10), comprenant :
un moteur central possédant un espace annulaire de gaz de travail aboutissant à une buse d'échappement centrale (19) pour l'évacuation du gaz chaud hors du moteur central ;
un conduit de dérivation (22) aboutissant à une buse d'échappement de dérivation (23) pour le refoulement d'un débit d'air de dérivation depuis le conduit de dérivation, la buse d'échappement de dérivation se trouvant en avant par rapport à la buse d'échappement centrale, et le conduit de dérivation possédant une paroi interne (24) formant un capot pour le moteur central, et aboutissant à la buse d'échappement de dérivation ;
et un arrière-corps de capot central (25) formant une surface tronconique balayée par l'air poursuivant sans interruption, sur une section longitudinale à travers le moteur, la ligne de la paroi interne du conduit de dérivation en aval de la buse d'échappement de dérivation ;
**caractérisé en ce que** la surface balayée par l'air de l'arrière-corps de capot central présente plusieurs striures circonférentielles à espacement axial entravant localement le débit d'air sur la surface.

2. Moteur à turbine à gaz selon la revendication 1, la surface tronconique balayée par l'air poursuivant sans interruption la ligne de la paroi interne du conduit de dérivation en aval de la buse d'échappement de dérivation pour aboutir à un rebord d'un évent circonférentiel (26) en avant par rapport à la buse d'échappement centrale.

3. Moteur à turbine à gaz selon la revendication 1 ou 2, une ou au moins certaines des striures étant configurées de sorte que, sur un profil longitudinal à travers le moteur, elles forment des gradins discrets dans le profil de la surface balayée par l'air sur le profil longitudinal.

4. Moteur à turbine à gaz selon une quelconque des revendications précédentes, une ou au moins certaines des striures étant configurées de sorte que, sur un profil longitudinal à travers le moteur, elles forment des ondes lisses dans le profil de la surface balayée par l'air sur le profil longitudinal.

5. Moteur à turbine à gaz selon une quelconque des revendications précédentes, la hauteur des striures étant comprise entre 0,1 et 3 mm.

6. Moteur à turbine à gaz selon la revendication 5, la hauteur des striures étant comprise entre 0,2 mm et 1 mm.
